# EUROPÄISCHE PATENTSCHRIFT

(11) **EP 2 066 473 B1**
(45) Veröffentlichungstag und Bekanntmachung des Hinweises auf die Patenterteilung: **20.10.2010**
(21) Anmeldenummer: 07785665.6
(22) Anmeldetag: 20.07.2007
(51) Int. Cl.: B23F 17/00, B23F 19/10, B23F 23/04

(54) **WÄLZENTGRATEN MIT INTEGRIERTEM SEKUNDÄRENTGRATEN OHNE GLÄTTWERKZEUG**
DEBURRING BY HOBBING WITH INTEGRATED SECONDARY DEBURRING WITHOUT A SMOOTHING TOOL
ÉBARBAGE DE CYLINDRES À ÉBARBAGE SECONDAIRE INTÉGRÉ SANS OUTIL DE LISSAGE

(30) Priorität: 20.09.2006 DE 102006044738
(43) Veröffentlichungstag der Anmeldung: 10.06.2009
(73) Patentinhaber: FELSOMAT GmbH & Co. KG, 75203 Königsbach-Stein (DE)
(72) Erfinder: JAEGER, Helmut, F., 75203 Königsbach-Stein (DE); PESCHINA, Juergen, 75438 Knittlingen (DE)
(74) Vertreter: Kohler Schmid Möbus
(86) Internationale Anmeldenummer: PCT/DE2007/001297
(87) Internationale Veröffentlichungsnummer: WO 2008/034402

(56) Entgegenhaltungen:
- DE-A1- 19 857 592
- US-A1- 2002 197 121
- US-A1- 2003 210 964

## Beschreibung

Die Erfindung betrifft ein Verfahren zum Betrieb einer Werkzeugmaschine zur Verzahnungsbearbeitung von Werkstücken, wobei die Werkzeugmaschine einen um eine Hauptachse HA verschwenkbaren Drehhalter mit zwei Werkstückspindeln aufweist, deren Spindelachsen parallel zur Hauptachse HA verlaufen, insbesondere wobei die Spindelachsen jeweils gleichen Abstand zur Hauptachse HA aufweisen, wobei der Drehhalter in eine erste Verschwenkposition verschwenkbar ist, in der die erste Werkstückspindel in einer Transferposition und die zweite Werkstückspindel in einer Bearbeitungsposition ist, und wobei der Drehhalter in eine zweite Verschwenkposition verschwenkbar ist, in der die erste Werkstückspindel in der Bearbeitungsposition und die zweite Werkstückspindel in der Transferposition ist.

Ein solches Betriebsverfahren und eine zugehörige Werkzeugmaschine sind bekannt geworden durch die "RZ 150" der Firma Reishauer AG.

Verzahnte Werkstücke, insbesondere Zahnräder, werden im Maschinenbau für zahlreiche Anwendungen benötigt. Zahnräder werden typischerweise durch Fräsen auf Wälzfräsmaschinen aus einen metallenen Rohling gefertigt. Um eine lange Einsatzdauer von Zahnrädern zu gewährleisten, müssen die Kanten der Zahnräder frei von sogenannten Graten sein. Grate sind Materialüberstände, die beim Fräsen einen Zahnrades am Zahnrad entstehen, insbesondere im Nahbereich von Kanten.

Es ist bekannt, nach dem Fräsen mit einem sogenannten Fingerfräser an jedem Zahn eines Zahnrades an den Kanten entlang zu fahren und so eine Entgratung vorzunehmen. Dieses Verfahren ist jedoch sehr zeitintensiv und aufwändig.

Durch die Firmendruckschrift "Wälzentgratwerkzeuge" der Firma Gleason-Hurth, München, 3/2001, ist eine Entgratung mit folgendem Ablauf bekannt geworden: Zunächst erfolgt das Fräsen des Zahnrads. Gleichzeitig oder anschließend werden die Materialüberstände, die sich in axialer Richtung des Zahnrades von den Zähnen weg erstrecken, abgeschält. Dieses Abschälen wird im Folgenden als "Schneiden" bezeichnet (Im Stand der Technik wird dieser Vorgang allein auch als Entgraten bezeichnet). Anschließend wird das Zahnrad auf eine andere Maschine verbracht und angephast, d.h. zumindest einige Kanten der Zähne werden durch ein schräg angreifendes, ebenes Anphaswerkzeug plastisch verformt und damit angeschrägt, wobei Materialwülste mit radialem und axialem Überstand entstehen. Die axialen Überstände werden durch Schneiden beseitigt. Die radialen Überstände werden durch Glätten beseitigt, d.h. ein Glättwerkzeug wird in radialer Richtung an das Zahnrad herangeführt und verformt den radialen Überstand plastisch und drückt ihn platt. Nachteilig bei diesem Verfahren ist der große zeitliche Aufwand für alle Verfahrensschritte. Insbesondere benötigen das Fräsen und das Anphasen jeweils ein eigenes Aufspannen und eine Synchronisation des Werkstücks mit dem jeweiligen Werkzeug.

Durch die Liebherr Wälzfräsmaschine LC 120, vgl. Firmendruckschrift "Sigma Aktuell 05", S. 6, 2005, ist ein schnellerer Verfahrensgang bekannt geworden: Mit einem Spezialfräser erfolgt zunächst ein normales Fräsen des Zahnrads und ggf. ein Schneiden. Anschließend erfolgt mit jeweils speziellen Abschnitten des Spezialfräsers nacheinander ein erstes und ein zweites Phasenfräsen, wobei eine linke und rechte Phase durch Fräsen, d.h. mit Materialabtrag, gefertigt werden. Anschließend erfolgt ein Nachfräsen der Verzahnung mit einem weiteren Abschnitt des Spezialfräsers. Mit Hilfe des Spezialfräser können sorgfältig entgratete Zahnräder ohne Umspannen gefertigt werden. Allerdings verlängert das Phasenfräsen die Bearbeitungszeit an der Fräsmaschine. Weiterhin ist der Spezialfräser teuer und kann nur schwer nachgeschliffen werden. Das Nachschleifen erfordert ein Zerlegen des Spezialfräsers.

### Aufgabe der Erfindung

Demgegenüber ist es die Aufgabe der vorliegenden Erfindung, ein Verfahren bereitzustellen, mit dem gut entgratete verzahnte Werkstücke schnell und kostengünstig gefertigt werden können.

### Kurze Beschreibung der Erfindung

Diese Aufgabe wird gelöst durch ein Betriebsverfahren der eingangs genannten Art, gekennzeichnet durch folgende Schritte:
a) der Drehhalter wird in die erste Verschwenkposition verbracht, an der ersten Werkstückspindel in der Transferposition wird ein Fertigteil entladen und ein Rohteil beladen, und an der zweiten Werkstückspindel in der Bearbeitungsposition wird aus einem Rohteil durch Vorfräsen ein Halbfertigteil gefertigt;
b) der Drehhalter wird in die zweite Verschwenkposition verbracht, an der ersten Werkstückspindel in der Bearbeitungsposition wird aus dem Rohteil durch Vorfräsen ein Halbfertigteil gefertigt, und an der zweiten Werkstückspindel in der Transferposition wird durch Anphasen und Schneiden aus dem Halbfertigteil ein entgratetes angephastes Halbfertigteil gefertigt;
c) der Drehhalter wird in die erste Verschwenkposition verbracht, an der ersten Werkstückspindel in der Transferposition wird durch Anphasen und Schneiden aus dem Halbfertigteil ein entgratetes angephastes Halbfertigteil gefertigt, und an der zweiten Werkstückspindel in der Bearbeitungsposition wird aus dem entgrateten angephasten Halbfertigteil durch Feinfräsen ein Fertigteil gefertigt;
d) der Drehhalter wird in die zweite Verschwenkposition verbracht, an der ersten Werkstückspindel in der Bearbeitungsposition wird aus dem entgrateten angephasten Halbfertigteil durch Feinfräsen ein Fertigteil gefertigt, und an der zweiten Werkstückspindel in der Transferposition wird das Fertigteil entladen und ein Rohteil beladen; wobei die Schritte a) bis d) wenigstens einmal wiederholt werden.

Im Rahmen der Erfindung werden nachfolgende Begriffe wie folgt gebraucht:
- Entgraten bezeichnet allgemein das Beseitigen von Materialüberständen vom Werkstück.
- Schneiden bezeichnet speziell das Abschälen von Materialüberständen, die sich in axialer Richtung vom Werkstück weg erstrecken. Das Abschälen erfolgt typischerweise mit der scharfen Kante eines Schneidwerkzeugs.

Mit dem erfindungsgemäßen Betriebsverfahren erfolgt eine Verzahnungsbearbeitung eines Werkstücks einschließlich Entgraten mit Vorfräsen (meist ergänzt durch Schneiden), Anphasen mit Schneiden, sowie Feinfräsen (=Fertigfräsen). Dabei wird das Werkstück nur einmal zu Beginn der Bearbeitung auf eine Werkstückspindel aufgespannt. Vorfräsen und Feinfräsen erfolgt in einer Bearbeitungsposition der Werkstückspindel, und das Anphasen mit Schneiden erfolgt in einer Transferposition der Werkstückspindel. An der Transferposition erfolgt darüber hinaus vor Bearbeitungsbeginn und nach Bearbeitungsende der Werkstückwechsel.

Durch das nur einmalige Aufspannen des Werkstücks für Fräsen und Entgraten wird im Vergleich zum Stand der Technik nach Gleason-Hurth viel Montageaufwand und Zeit eingespart. Neben der Aufspannzeit selbst entfällt auch ein erneutes Synchronisieren von einer Werkstückspindel und einem Anphaswerkzeug für das Entgraten. Insbesondere ist auch eine separate Entgratungsmaschine für das Anphasen im Rahmen der Erfindung nicht erforderlich. Durch das Feinfräsen, bei dem nur wenig Material abgetragen und daher auch kein Grat erzeugt wird, kommt die Erfindung auch ohne ein abschließendes Glätten aus. Es ist somit erfindungsgemäß auch kein Glättwerkzeug erforderlich.

Gegenüber dem Stand der Technik nach Liebherr wird ohne einen teuren und wartungsintensiven Spezialfräser ausgekommen. Außerdem kann zeitparallel zum Vorfräsen und Fertigfräsen das Anphasen mit Schneiden und der Werkstückwechsel erfolgen. Mit anderen Worten: Die Zeit für das Phasenfräsen bei Liebherr kann mit der Erfindung vollständig eingespart werden.

Die Nebenzeit des Fräswerkzeugs an der Bearbeitungsposition kann im Rahmen der Erfindung im Wesentlichen auf die Zeit für das Verschwenken des Drehhalters reduziert werden. Dadurch wird eine hervorragende Auslastung des Fräswerkzeugs erreicht.

Insgesamt kann mit der Erfindung eine kostengünstige, sehr schnelle und qualitativ gute Verzahnungsbearbeitung eines Werkstücks mit Entgraten erfolgen.

### Bevorzugte Ausführungsformen der Erfindung

Besonders bevorzugt ist eine Variante des erfindungsgemäßen Verfahrens, bei der während der Verfahrensschritte a) bis d) die Hauptachse HA des Drehhalters horizontal ausgerichtet ist. Dies vermeidet die Bildung von Spänenestern. Materialspäne, insbesondere heiße Metallspäne, können von Werkstück und Werkstückspindel weg einfach nach unten fallen und stören so den Bearbeitungsablauf nicht mehr. Alternativ kann die Hauptachse auch vertikal ausgerichtet sein, was Lagerkräfte verringert.

Bei einer bevorzugten Verfahrensvariante wird für das Vorfräsen von Rohteilen und das Feinfräsen von entgrateten angephasten Halbfertigteilen an der Bearbeitungsposition das selbe Werkzeug der Werkzeugmaschine eingesetzt. Dadurch kann der Aufbau der Werkzeugmaschine vereinfacht und die Werkzeugmaschine verbilligt werden. Das Werkzeug (Fräswerkzeug) erreicht eine gute Auslastung.

Besonders bevorzugt ist auch eine Verfahrensvariante, die vorsieht, dass in den Schritten b) und c) das Anphasen eines Halbfertigteils an der Transferposition von zwei Seiten mit Kraftausgleich erfolgt. Dadurch werden Kräfte auf das Werkstück bzw. die Werkstückspindel, die das Werkstück hält, verringert, wodurch wiederum Verformungen vermieden werden. Die beiden Seiten sind typischerweise bezüglich des Lagers des Werkstücks gegenüberliegend.

Eine bevorzugte Weiterentwicklung dieser Verfahrensvariante sieht vor, dass in den Schritten b) und c) zum Anphasen eines Halbfertigteils an der Transferposition zwei gegenüberliegende Anphasscheiben eingesetzt werden. Die Anphasscheiben können dabei gleichzeitig beide Stirnseiten des Werkstücks bearbeiten. Die Anphasscheiben sind gut über Arme an das Werkstück heranführbar und können gut "schwimmend" mit Kraftausgleich geführt werden.

Bei einer vorteilhaften Fortführung dieser Weiterentwicklung ist vorgesehen, dass in die Anphasscheiben Schneidwerkzeuge integriert sind, und die Anphasscheiben zum Anphasen und Schneiden eingesetzt werden. Integration der Werkzeuge meint dabei, dass eine Anphasscheibe und ein Schneidwerkzeug gemeinsam verfahren und eingesetzt werden können, insbesondere wobei Anphaswerkzeug und Schneidwerkzeug einen gemeinsamen Halter, etwa einen verfahrbaren Arm, aufweisen. Durch die Integration kann der Aufbau der Werkzeugmaschine vereinfacht werden, insbesondere bezüglich der zahl der zu bewegenden Teile.

Bei einer alternativen Verfahrensvariante des erfindungsgemäßen Verfahrens erfolgt in den Schritten b) und c) das Anphasen und das Schneiden eines Halbfertigteils an der Transferposition jeweils mit separaten Werkzeugen. Separate Werkzeuge sind günstig in der Anschaffung und leicht zu warten.

Bei einer anderen, vorteilhaften Verfahrensvariante erfolgt in den Schritten b) und c) das Anphasen eines Halbfertigteils an der Transferposition von einer ersten Seite und das Schneiden des Halbfertigteils an der Transferposition von einer zweiten Seite, die der ersten Seite gegenüberliegt, mit separaten, gegenüberliegenden Werkzeugen. Durch dieses Vorgehen kann ein zumindest teilweiser Kraftausgleich erreicht werden, der Werkstück und Lager schont.

Bei einer ganz besonders bevorzugten Verfahrensvariante ist vorgesehen, dass in den Schritten a) und b) beim oder nach dem Vorfräsen eines Rohteils an der Bearbeitungsposition auch ein Schneiden erfolgt. Durch das zusätzliche Schneiden wird der axiale Materialüberstand des Vorfräsens abgetrennt, bevor das Anphasen erfolgt. Das Anphasen erfolgt dann an einer besser definierten Kante, und das beim Anphasen umverteilte Material wird verringert. Letzteres verkleinert den Verformungswulst nach dem Anphasen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Zeichnung und detaillierte Beschreibung der Erfindung

Die Erfindung ist in der Zeichnung dargestellt und wird anhand von Ausführungsbeispielen näher erläutert. Es zeigt:
- Fig.1: eine schematische Schrägansicht einer Werkzeugmaschine, mit der das erfindungsgemäße Betriebsverfahren durchgeführt werden kann;
- Fig. 2: eine schematisches Ablaufdiagramm des erfindungsgemäßen Verfahrens an den Werkstückspindeln auf dem Drehhalter;
- Fig. 3a-3f: Darstellungen des Bearbeitungszustands eines Werkstück während des erfindungsgemäßen Verfahrens, wobei das Werkstück im schematischen Querschnitt dargestellt ist;
- Fig. 3g: ein Ausschnitt aus einer schematischen Schrägansicht des Fertigteils von Fig. 3f;
- Fig. 4a: ein schematischer Querschnitt durch eine Anphasscheibe, die beim erfindungsgemäßen Verfahren eingesetzt werden kann;
- Fig. 4b: eine schematische Aufsicht auf ein Werkstück beim Anphasen mit Schneiden, wobei zwei gegenüberliegende Anphasscheiben und ein separates Schneidwerkzeug eingesetzt werden;
- Fig. 4c: eine schematische Aufsicht auf ein Werkstück beim Anphasen mit Schneiden, wobei eine Anphasscheibe und ein separates, gegenüberliegendes Schneidwerkzeug eingesetzt werden;
- Fig. 5a: ein schematischer Querschnitt durch eine Anphasscheibe mit integriertem Schneidwerkzeug, die beim erfindungsgemäßen Verfahren eingesetzt werden kann;
- Fig. 5b: eine schematische Aufsicht auf ein Werkstück beim Anphasen mit Schneiden, wobei zwei gegenüberliegende Anphasscheiben mit integriertem Schneidwerkzeug eingesetzt werden.

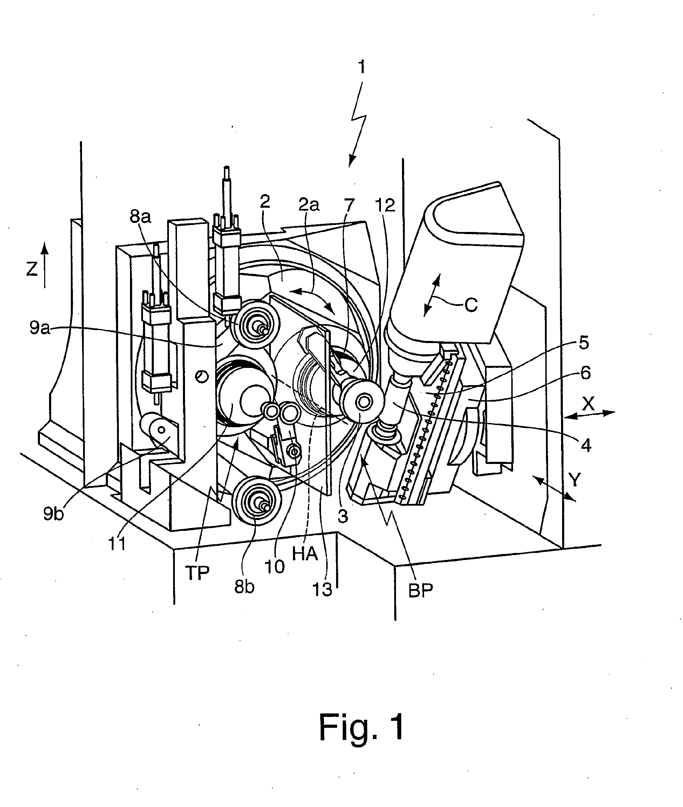

In **Figur 1** ist eine Werkzeugmaschine 1 dargestellt, mit der das erfindungsgemäße Betriebsverfahren eingesetzt werden kann.

Die Werkzeugmaschine 1 verfügt über einen Drehhalter 2, der als eine Trommel ausgebildet ist und um eine horizontal verlaufende Hauptachse HA in Pfeilrichtung 2a motorisch gedreht werden kann. Auf dem Drehhalter 2 sind eine erste Werkstückspindel 11 und eine zweite Werkstückspindel 12 angeordnet. Auf den Werkstückspindeln 11, 12 kann jeweils ein Werkstück aufgespannt werden, etwa mittels eines Spannfutters, und motorisch in Rotation versetzt werden. Die Rotationsachsen der Werkstückspindeln 11, 12 verlaufen parallel zur Hauptachse HA und haben von dieser den gleichen Abstand. Im gezeigten Zustand ist nur auf der zweiten Werkstückspindel 12 ein Werkstück 3 befestigt. Zwischen den Werkstückspindeln 11, 12 ist ein transparenter Schutzschild 13 angeordnet, um einen Späneflug zwischen den Werkstückspindeln 11, 12 zu verhindern.

Der Drehhalter 2 befindet sich in Fig. 1 in einer ersten Verschwenkposition. Dabei ist die erste Werkstückspindel 11 in einer Transferposition TP an der linken Seite, und die zweite Werkstückspindel 12 befindet sich an einer Bearbeitungsposition BP auf der rechten Seite der Werkzeugmaschine 1.

Durch Drehen des Drehhalters 2 kann die erste Werkstückspindel 11 jedoch auf die Bearbeitungsposition BP nach rechts, und die zweite Werkstückspindel 12 auf die Transferposition TP nach links verfahren werden; dies entspräche einer zweiten Verschwenkposition (nicht dargestellt in Fig. 1). Der Drehhalter 2 kann jeweils mit einem mechanischen Anschlag für die beiden Verschwenkpositionen ausgestattet sein.

Das Werkstück 3 auf der (hier zweiten) Werkstückspindel 12 in der Bearbeitungsposition BP ist für ein Fräswerkzeug 4 zugänglich. Das Fräswerkzeug 4 ist auf einem Halter 5 befestigt. Der Halter 5 kann gegenüber einem Schlitten 6 in Richtung C verfahren werden. Der Schlitten 6 wiederum ist in die Richtungen x und y gegenüber dem Maschinenbett der Werkzeugmaschine 1 verfahrbar. Das Fräswerkzeug 4 selbst ist um seine Längsachse (diese verläuft parallel zu Pfeilrichtung C) motorisch rotierbar. Zusätzlich zum Fräswerkzeug 4 ist an der Bearbeitungsposition BP noch ein erstes Schneidwerkzeug 7 vorgesehen, mit dem ebenfalls das Werkstück 3 auf der (hier zweiten) Werkstückspindel 12 bearbeitet werden kann.

An der Transferposition TP sind in der gezeigten Ausführungsform der Werkzeugmaschine 1 zwei Anphasscheiben 8a, 8b vorgesehen, die jeweils auf Verschwenkarmen 9a, 9b befestigt sind. Mit Hilfe der Verschwenkarme 9a, 9b können die Anphasscheiben 8a, 8b in einer Ebene senkrecht zur Hauptachse HA bewegt werden, insbesondere auf die Rotationsachse der (hier ersten) Werkstückspindel 11 an der Transferposition TP zu bzw. von dieser weg. Weiterhin ist ein zweites Schneidwerkzeug 10 vorgesehen, mit dem Werkstücke auf der (hier ersten) Werkstückspindel 11 an der Transferposition TP bearbeitet werden können. Ebenfalls zur Transferposition TP gehört eine Vorrichtung zum Wechseln von Werkstücken auf der (hier ersten) Werkstückspindel 11 an der Transferposition TP, etwa ein Roboterarm (nicht dargestellt). Die Vorrichtung zum Wechseln von Werkstücken kann in die Werkzeugmaschine 1 integriert sein oder separat von ihr sein.

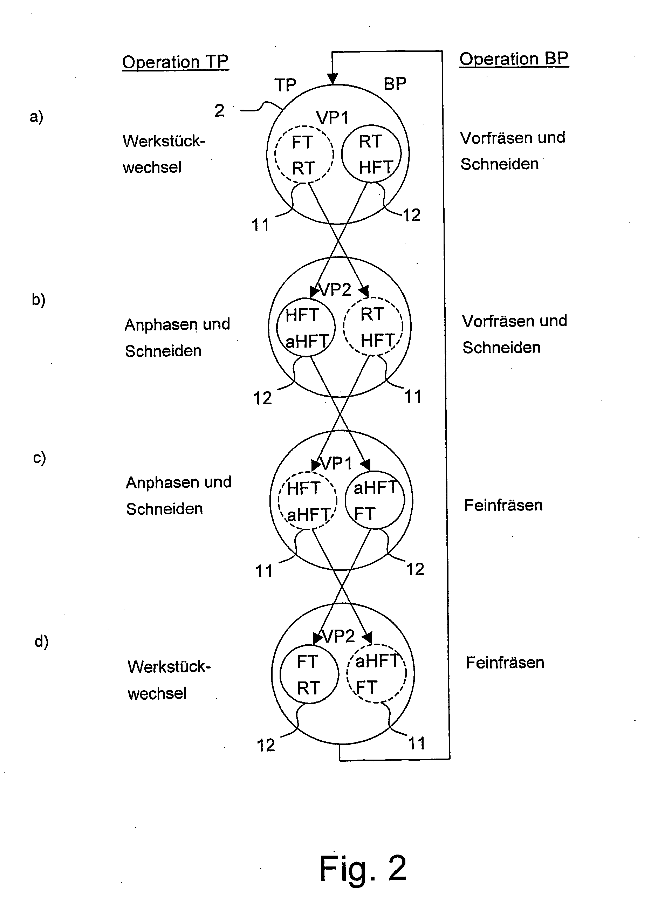

Die **Figur 2** erläutert den Ablauf der Werkstückbearbeitung auf den beiden Werkstückspindeln 11, 12 auf dem Drehhalter 2.

Zu Beginn des Verfahrens, vgl. Reihe a), wird der Drehhalter 2 in eine erste Verschwenkposition VP1 gebracht. Die erste Werkstückspindel 11 befindet sich dann an der Transferposition TP links. In folgenden ist die erste Werkstückspindel 11 durch einen gestrichelten Kreis gekennzeichnet. Auf der ersten Werkstückspindel 11 befindet sich gerade ein Fertigteil FT. Die zweite Werkstückspindel 12, gekennzeichnet mit einem durchgezogenen Kreis, befindet sich an der Bearbeitungsposition BP rechts. Auf der zweiten Werkstückspindel 12 ist ein Rohteil RT aufgespannt.

Im Rahmen des ersten *Schritts a)* wird nun an der Transferposition TP das Fertigteil FT aus der ersten Werkstückspindel 11 ausgespannt und durch ein Rohteil RT aus einem Rohteilevorrat ersetzt. An der Bearbeitungsposition BP wird das Rohteil RT mit dem Fräswerkzeug vorgefräst. In der dargestellten Variante wird das Werkstück an der zweiten Werkstückspindel 12 auch gleichzeitig oder unmittelbar anschließend einem Schneiden unterzogen, d.h. die axialen Materialüberstände (Grate) werden entfernt. Aus dem Rohteil RT entsteht so ein Halbfertigteil HFT.

Zu Beginn des nachfolgenden *Schritts b)* wird der Drehhalter 2 in die zweite Verschwenkposition VP2 gedreht. An der ersten Werkstückspindel 11 wird das Rohteil RT nun an der Bearbeitungsposition BP. dem Vorfräsen und Schneiden unterzogen, wobei aus dem Rohteil RT ein Halbfertigteil HFT entsteht. An der zweiten Werkstückspindel 12 erfolgt am Halbfertigteit HFT ein Anphasen und gleichzeitig oder anschließend ein Schneiden, wodurch ein (im Rahmen des Schneidens) entgratetes und angephastes Halbfertigteil aHFT entsteht.

Zu Beginn des nunmehr folgenden dritten *Schritts c)* wird der Drehhalter 2 wieder in die erste Verschwenkposition VP1 verbracht. An der ersten Werkstückspindel 11 in der Transferposition TP wird durch Anphasen und Schneiden aus dem Halbfertigteil HFT ein entgratetes angephastes Halbfertigteil (aHFT) gefertigt. An der zweiten Werkstückspindel 12 in der Bearbeitungsposition BP wird aus dem entgrateten angephasten Halbfertigteil aHFT durch Feinfräsen (auch genannt Fertigfräsen) ein Fertigteil FT hergestellt. Im darauffolgenden *Schritt d)* wird zunächst der Drehhalter 2 in die zweite Verschwenkposition VP2 geschwenkt. An der ersten Werkstückspindel 11 an der Bearbeitungsposition BP wird das entgratete angephaste Halbfertigteil aHFT durch Feinfräsen zu einem Fertigteil FT. An der zweiten Werkstückspindel 12 in Transferposition TP wird das Fertigteil FT entfernt und ein neues Rohteil RT eingespannt.

Das Verfahren kann sodann mit Schritt a) fortgesetzt werden, welcher mit einem Verbringen des Drehhalters 2 in die erste Verschwenkposition VP1 beginnt.

Um das erfindungsgemäße Verfahren erstmals zu beginnen, wird in einem ersten Vorschritt d') zunächst in der zweiten Verschwenkposition VP2 des Drehhalters 2 nur auf die leere zweite Werkstückspindel 12 in der Transferposition TP ein neues Rohteil RT aufgespannt. Im anschließenden zweiten Vorschritt a') wird nach Verbringen in die erste Verschwenkposition VP1 auf der ersten Werkstückspindel 11 in der Transferposition nur ein neues Rohteil RT aufgespannt. An der zweiten Werkstückspindel 12 kann hingegen schon mit dem Vorfräsen und Schneiden am dortigen Rohteil RT begonnen werden. Um das erfindungsgemäße Verfahren zu beenden, braucht lediglich auf das Aufspannen neuer Rohteile RT verzichtet zu werden.

Der Zeitrahmen für ein Vorfräsen und Schneiden eines Rohteils RT an einer Werkstückspindel an der Bearbeitungsposition BP beträgt beispielsweise 10 s (s=Sekunden). Für ein Feinfräsen an einer Werkstückspindel der Bearbeitungsposition BP wird beispielsweise 5 s benötigt. Ein Verschwenken des Drehhalters 2 benötigt beispielsweise 2 s. Ein Werkstückwechsel an einer Werkstückspindel in der Transferposition TP benötigt typischerweise und bevorzugt weniger Zeit als das Feinfräsen; ebenso benötigt das Anphasen und Schneiden an einer Werkstückspindel in der Transferposition TP typischerweise und bevorzugt weniger Zeit als das Feinfräsen. In einem vollständigen Durchgang der Schritte a) bis d) fällt dann zweimal die Zeit für das Vorfräsen (20 s) und zweimal die Zeit für das Feinfräsen (10 s) an, dazu kommen vier Verschwenkungen des Drehhalters (8 s). In Insgesamt 38 s werden somit zwei Fertigteile FT hergestellt. Die Zeiten für Werkstückwechsel und Entgraten (d.h. Anphasen und Schneiden) gehen wegen ihrer Ausführung parallel zum Fräsen in die Fertigungsdauer nicht ein, sofern diese Schritte an der Transferposition TP kürzer sind als die Dauer des Feinfräsens. Damit kann erfindungsgemäß eine sehr schnelle und effiziente Teilefertigung erreicht werden.

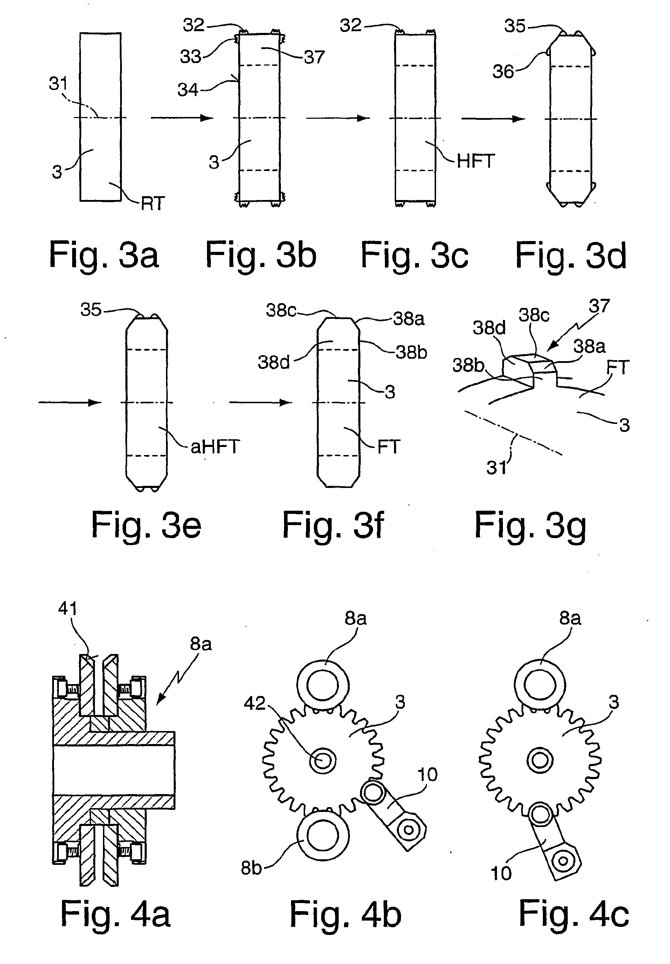

Die **Figuren 3a bis 3f** illustrieren den Bearbeitungsfortschritt an einem Werkstück an einer Werkstückspindel im Rahmen des erfindungsgemäßen Verfahrens, wie es in Fig. 2 aufgezeigt ist. Es ist jeweils dargestellt ein Werkstück 3, aus dem ein Zahnrad gefertigt wird, im Querschnitt in einer Ebene, durch eine Rotationsachse 31 des Werkstücks 3 verläuft.

Das in **Fig. 3a** dargestellte Rohteil RT ist im Wesentlichen eine kreisrunde Metallscheibe. Durch Vorfräsen werden am Rand des Werkstücks 3 Zähne 37 geschliffen bzw. Zahnlücken eingefräst. Dabei entstehen sowohl in radiale Richtung ragende Materialüberstände 32 (kurz: radiale Grate 32) als auch in axialer Richtung ragende Materialüberstände 33 (kurz: axiale Grate 33), vgl. **Fig. 3b****.** Diese Grate 32, 33 sind zum einen ein Verletzungsrisiko und zum anderen eine Defektquelle in Getrieben und sollen daher entfernt werden.

Die axialen Grate 33 werden erfindungsgemäß nach dem Vorfräsen durch Schneiden entfernt. Dabei wird eine (typischerweise gerade) Schneidkante an den Stirnseiten 34 des Werkstücks 3 entlang geführt bzw. angelegt, wodurch die axialen Grate 33 abgeschält werden. Dieses Schneiden wird im Stand der Technik auch als "Entgraten" bezeichnet. Nach dem Vorfräsen und Schneiden (das Schneiden ist im Rahmen der Erfindung an dieser Stelle optional) liegt ein Halbfertigteil HFT vor, vgl. **Fig. 3c****.**

Um die radialen Grate 32 zu beseitigen erfolgt sodann erfindungsgemäß das Anphasen. Dabei wird eine flaches Anphaswerkzeug an die Kanten des Halbfertigteils mit großer Kraft gepresst, so dass sich die Kanten plastisch verformen. Dabei wird Material von den Kanten weg nach außen gedrückt, und es entstehen in radialer Richtung überstehende Materialwulste 35 und in axialer Richtung überstehende Materialwulste 36, vgl. **Fig. 3d****.** Die axialen Materialwulste 36 werden durch Schneiden beseitigt; dieses Schneiden wird auch als Sekundärentgraten bezeichnet. Das Schneiden erfolgt hier nach dem Anphasen, alternativ kann auch Anphasen und Schneiden zeitgleich erfolgen. Den Zustand des Werkstücks 3 nach dem Schneiden, also das angephaste und im Rahmen des letzten Schneidens entgratete Halbfertigteil aHFT, zeigt

### Fig. 3e.

Die verbleibenden radialen Materialwulste 35 werden sodann durch Feinfräsen (auch genannt Fertigfräsen) beseitigt. Dabei wird vom Werkstück 3 noch eine etwas Material weggefräst, was jedoch aufgrund der geringen Materialmenge und folglich geringen Materialbeanspruchung nicht zu Graten führt. Das Werkstück 3 nach dem Feinfräsen, also das Feritgteil FT, zeigt **Fig. 3f****.**

Ergänzend zeigt **Fig. 3g** einen Ausschnitt des Fertigteils FT von Fig.3f, nämlich den Bereich eines einzelnen Zahns 37 des Werkstücks 3, in einer perspektivischen Schrägansicht. Gut zu erkennen ist die angephaste Kante 38a, die zwischen Stirnseite 38b und Oberseite 38c des Zahns 37 gelegen ist. Im Rahmen der Erfindung können auch andere Kanten des Zahns 37, insbesondere die Kanten zwischen Stirnseite 38b und Innenseite 38d des Zahns 37, alternativ oder zusätzlich angephast und entgratet werden. Im rahmen der Erfindung können grundsätzlich auch andere Zahntypen als der dargestellte Zahn 37 gefertigt werden, insbesondere mit Zahnflächen, die gegenüber der axialen und/oder radialen Richtung schräg verlaufen.

Die **Figur 4a** zeigt die Anphasscheibe 8a von Fig. 1 in einem schematischen Querschnitt in der dortigen yz-Ebene. An der Anphasscheibe 8a sind flache Anphaswerkzeuge 41 ausgebildet, die auf eine Kante des Werkstücks aufgepresst werden. Das Werkstück liegt dabei zwischen zwei benachbarten Anphaswerkzeugen 41 und kann dadurch an Ober- und Unterseite gleichzeitig angephast werden (nicht dargestellt). Der Abstand der Anphaswerkzeuge 41 kann zur Anpassung an verschiedene Werkstücktypen und/oder zur Kraftaufbringung variiert werden.

In **Fig. 4b** ist eine erste Variante für das Anphasen und Schneiden an einem Werkstück 3, das an einer Werkstückspindel an der Transferposition angeordnet ist, in Aufsicht auf das Werkstück 3 dargestellt. Das Werkstück 3 ist mit einem Spannfutter 42 an der Werkstückspindel befestigt. Zwei Anphasscheiben 8a, 8b liegen einander bezüglich des Spannfutters 42 (oder der Werkstückachse) gegenüber. Die Anphasscheiben werden mit gleicher Kraft an das Werkstück gepresst, so dass das Werkstück 3 bezüglich seines Lagers kein Moment erfährt. Zusätzlich führt ein Schneidwerkzeug 10 ein Schneiden am Werkzeug 3 aus. Die Werkzeugmaschine von Fig. 1 ist für diese Variante eingerichtet.

**Fig. 4c** zeigt eine zweite Variante für das Anphasen und Schneiden am Werkstück 3. Eine einzelne Anphasscheibe 8a liegt hier einem Schneidwerkzeug 10 gegenüber. Das Schneidwerkzeug 10 kompensiert teilweise das Moment, das durch die Anphasscheibe 8a auf das Werkstück 3 aufgebracht wird.

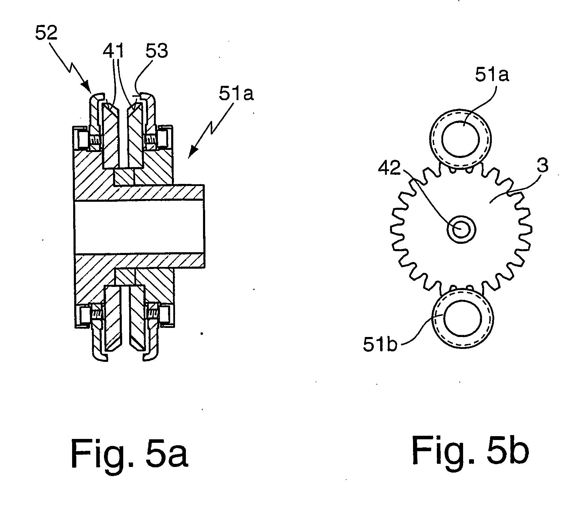

In **Fig. 5a** ist dargestellt eine Anphasscheibe 51a entsprechend der Anphasscheibe von Fig. 4a, jedoch mit integriertem Schneidwerkzeug 52 in schematischer Querschnittsansicht. Das Schneidwerkzeug 52 verfügt über Schneidkanten 53, die über die Stirnflächen eines Zahnrads verfahren können, um axiale Materialüberstände (Grate oder auch Verformungswulste) abzuschälen.

In **Fig. 5b** ist der Einsatz von zwei Anphasscheiben 51a, 51b mit integriertem Schneidwerkzeug an einem Werkstück 3 in Aufsicht gezeigt. Die Anphasscheiben 51a, 51b werden gegenüberliegend bezüglich des Spannfutters 42 positioniert, auf dem das Werkstück 3 befestigt ist, und mit gleicher Kraft eingesetzt. Dadurch werden wiederum Momente auf das Werkstück 3 und dessen Lager minimiert.

Zusammenfassend betrifft die Erfindung ein Verfahren zur Verzahnungsbearbeitung von Werkstücken, insbesondere Zahnrädern, mit Fräsen, Wälzentgraten und integriertem Sekundärentgraten. Das Verfahren läuft auf einer Werkzeugmaschine mit zwei Werkstückspindeln, die ihren Platz tauschen können, ab. Ein Werkstück wird auf einer ersten Werkstückspindel montiert, gefolgt von einem Platztausch der Werkstückspindeln, gefolgt von Vorfräsen und ggf. Schneiden (=abschälendes Entgraten) des Werkstücks, gefolgt von einem weiteren Platztausch, gefolgt von Anphasen und Schneiden des Werkstücks, gefolgt von einem weiteren Platztausch, gefolgt von einem Fertigfräsen des Werkstücks, gefolgt von einem weiteren Platztausch, gefolgt von einem Werkstückwechsel. Gleichzeitig erfolgt der gleiche Ablauf auf der zweiten Werkstückspindel zeitlich versetzt um einen Platztausch der Werkstückspindeln. Mit dem erfindungsgemäßen Verfahren können gut entgratete verzahnte Werkstücke schnell und kostengünstig gefertigt werden. Insbesondere kann ein Fräsen und vollständiges (=radiales und axiales) Entgraten mit nur einem Aufspannen des Werkstücks erfolgen. Fräsen einerseits und Entgraten und Werkstückwechsel andererseits erfolgen zeitsparend parallel.

## Patentansprüche

1. Verfahren zum Betrieb einer Werkzeugmaschine (1) zur Verzahnungsbearbeitung von Werkstücken (3),
wobei die Werkzeugmaschine (1) einen um eine Hauptachse (HA) verschwenkbaren Drehhalter (2) mit zwei Werkstückspindeln (11, 12) aufweist, deren Spindelachsen parallel zur Hauptachse (HA) verlaufen, insbesondere wobei die Spindelachsen jeweils gleichen Abstand zur Hauptachse (HA) aufweisen,
wobei der Drehhalter (2) in eine erste Verschwenkposition (VP1) verschwenkbar ist, in der die erste Werkstückspindel (11) in einer Transferposition (TP) und die zweite Werkstückspindel (12) in einer Bearbeitungsposition (BP) ist,
und wobei der Drehhalter (2) in eine zweite Verschwenkposition (VP2) verschwenkbar ist, in der die erste Werkstückspindel (11) in der Bearbeitungsposition (BP) und die zweite Werkstückspindel (12) in der Transferposition (TP) ist,
**gekennzeichnet durch** folgende Schritte:
a) der Drehhalter (2) wird in die erste Verschwenkposition (VP1) verbracht,
an der ersten Werkstückspindel (11) in der Transferposition (TP) wird ein Fertigteil (FT) entladen und ein Rohteil (RT) beladen,
und an der zweiten Werkstückspindel (12) in der Bearbeitungsposition (BP) wird aus einem Rohteil (RT) **durch** Vorfräsen ein Halbfertigteil (HFT) gefertigt;
b) der Drehhalter (2) wird in die zweite Verschwenkposition (VP2) verbracht, an der ersten Werkstückspindel (11) in der Bearbeitungsposition (BP) wird aus dem Rohteil (RT) **durch** Vorfräsen ein Halbfertigteil (HFT) gefertigt,
und an der zweiten Werkstückspindel (12) in der Transferposition (TP) wird **durch** Anphasen und Schneiden aus dem Halbfertigteil (HFT) ein entgratetes angephastes Halbfertigteil (aHFT) gefertigt;
c) der Drehhalter (2) wird in die erste Verschwenkposition (VP1) verbracht,
an der ersten Werkstückspindel (11) in der Transferposition (TP) wird durch Anphasen und Schneiden aus dem Halbfertigteil (HFT) ein entgratetes angephastes Halbfertigteil (aHFT) gefertigt,
und an der zweiten Werkstückspindel (12) in der Bearbeitungsposition (BP) wird aus dem entgrateten angephasten Halbfertigteil (aHFT) **durch** Feinfräsen ein Fertigteil (FT) gefertigt;
d) der Drehhalter (2) wird in die zweite Verschwenkposition (VP2) verbracht,
an der ersten Werkstückspindel (11) in der Bearbeitungsposition (BP) wird aus dem entgrateten angephasten Halbfertigteil (aHFT) **durch** Feinfräsen ein Fertigteil (FT) gefertigt,
und an der zweiten Werkstückspindel (12) in der Transferposition (TP) wird das Fertigteil (FT) entladen und ein Rohteil (RT) beladen;
wobei die Schritte a) bis d) wenigstens einmal wiederholt werden.

2. Verfahren nach Anspruch 1, **dadurch gekennzeichnet, dass** während der Verfahrensschritte a) bis d) die Hauptachse (HA) des Drehhalters (2) horizontal ausgerichtet ist.

3. Verfahren nach einem der vorhergehenden Ansprüche, **dadurch gekennzeichnet, dass** für das Vorfräsen von Rohteilen (RT) und das Feinfräsen von entgrateten angephasten Halbfertigteilen (aHFT) an der Bearbeitungsposition (BP) das selbe Werkzeug (4) der Werkzeugmaschine (1) eingesetzt wird.

4. Verfahren nach einem der vorhergehenden Ansprüche, **dadurch gekennzeichnet, dass** in den Schritten b) und c) das Anphasen eines Halbfertigteils (HFT) an der Transferposition (TP) von zwei Seiten mit Kraftausgleich erfolgt.

5. Verfahren nach Anspruch 4, **dadurch gekennzeichnet, dass** in den Schritten b) und c) zum Anphasen eines Halbfertigteils (HFT) an der Transferposition (TP) zwei gegenüberliegende Anphasscheiben (8a, 8b; 51a, 51b) eingesetzt werden.

6. Verfahren nach Anspruch 5, **dadurch gekennzeichnet, dass** in die Anphasscheiben (51a, 51b) Schneidwerkzeuge (52) integriert sind, und die Anphasscheiben (51a, 51b) zum Anphasen und Schneiden eingesetzt werden.

7. Verfahren nach einem der Ansprüche 1 bis 5, **dadurch gekennzeichnet, dass** in den Schritten b) und c) das Anphasen und das Schneiden eines Halbfertigteils (HFT) an der Transferposition (TP) jeweils mit separaten Werkzeugen (8a, 8b; 10) erfolgt.

8. Verfahren nach einem der Ansprüche 1 bis 3, **dadurch gekennzeichnet, dass** in den Schritten b) und c) das Anphasen eines Halbfertigteils (HFT) an der Transferposition (TP) von einer ersten Seite und das Schneiden des Halbfertigteils (HFT) an der Transferposition (TP) von einer zweiten
Seite, die der ersten Seite gegenüberliegt, mit separaten, gegenüberliegenden Werkzeugen (8a, 10) erfolgt.

9. Verfahren nach einem der vorhergehenden Ansprüche, **dadurch gekennzeichnet, dass** in den Schritten a) und b) beim oder nach dem Vorfräsen eines Rohteils (RT) an der Bearbeitungsposition (BP) auch ein Schneiden erfolgt.

## Claims

1. Method for operating a machine tool (1) for tooth-machining of workpieces (3), wherein the machine tool (1) has a rotary holder (2) which is rotatable about a main axis (HA) and which has two workpiece spindles (11, 12) whose spindle axes extend parallel to the main axis (HA), especially wherein the spindle axes are each at the same distance from the main axis (HA),
wherein the rotary holder (2) is rotatable into a first rotated position (VP1) in which the first workpiece spindle (11) is in a transfer position (TP) and the second workpiece spindle (12) is in a machining position (BP),
and wherein the rotary holder (2) is rotatable into a second rotated position (VP2) in which the first workpiece spindle (11) is in the machining position (PB) and the second workpiece spindle (12) is in the transfer position (TP),
**characterised by** the following steps:
a) the rotary holder (2) is brought into the first rotated position (VP1), at the first workpiece spindle (11), in the transfer position (TP), a finished part (FT) is unloaded and an unmachined part (RT) is loaded, and at the second workpiece spindle (12), in the machining position (BP), a semi-finished part (HFT) is produced from an unmachined part (RT) by pre-milling;
b) the rotary holder (2) is brought into the second rotated position (VP2),
at the first workpiece spindle (11), in the machining position (BP), a semi-finished part (HFT) is produced from the unmachined part (RT) by pre-milling,
and at the second workpiece spindle (12), in the transfer position (TP), a deburred chamfered semi-finished part (aHFT) is produced from the semi-finished part (HFT) by chamfering and cutting;
c) the rotary holder (2) is brought into the first rotated position (VP1),
at the first workpiece spindle (11), in the transfer position (TP), a deburred chamfered semi-finished part (aHFT) is produced from the semi-finished part (HFT) by chamfering and cutting,
and at the second workpiece spindle (12), in the machining position (BP), a finished part (FT) is produced from the deburred chamfered semi-finished part (aHFT) by fine-milling;
d) the rotary holder (2) is brought into the second rotated position (VP2),
at the first workpiece spindle (11), in the machining position (BP), a finished part (FT) is produced from the deburred chamfered semi-finished part (aHFT) by fine-milling, and at the second workpiece spindle (12), in the transfer position (TP), the finished part (FT) is unloaded and an unmachined part (RT) is loaded;
wherein steps a) to d) are repeated at least once.

2. A method according to claim 1, **characterised in that** the main axis (HA) of the rotary holder (2) is oriented horizontally during the method steps a) to d).

3. A method according to either of the preceding claims, **characterised in that** the same tool (4) of the machine tool (1) is used for the pre-milling of unmachined parts (RT) and for the fine-milling of deburred chamfered semi-finished parts (aHFT) at the machining position (BP).

4. A method according to any one of the preceding claims, **characterised in that**, in steps b) and c), the chamfering of a semi-finished part (HFT) at the transfer position (TP) is carried out from two sides with force equalisation.

5. A method according to claim 4, **characterised in that**, in steps b) and c), two opposing chamfering discs (8a, 8b; 51a, 51b) are used for chamfering a semi-finished part (HFT) at the transfer position (TP).

6. A method according to claim 5, **characterised in that that** cutting tools (52) are integrated in the chamfering discs (51a, 51b), and the chamfering discs (51a, 51b) are used for chamfering and cutting.

7. A method according to any one of claims 1 to 5, **characterised in that**, in steps b) and c), the chamfering and the cutting of a semi-finished part (HFT) at the transfer position (TP) are each performed with separate tools (8a, 8b; 10).

8. A method according to any one of claims 1 to 3, **characterised in that**, in steps b) and c), the chamfering of a semi-finished part (HFT) at the transfer position (TP) is performed from a first side and the cutting of the semi-finished part (HFT) at the transfer position (TP) is performed from a second side which is opposite the first side, with separate, opposing tools (8a, 10).

9. A method according to any one of the preceding claims, **characterised in that**, in steps a) and b), during or after pre-milling of an unmachined part (RT) at the machining position (BP), cutting is also performed.

## Revendications

1. Procédé d'actionnement d'une machine-outil (1) affectée à l'usinage de dentures sur des pièces (3),
ladite machine-outil (1) comportant un support rotatif (2) apte à pivoter autour d'un axe principal (HA), et muni de deux broches (11, 12) porte-pièces dont les axes s'étendent parallèlement audit axe principal (HA), les axes desdites broches présentant respectivement, en particulier, le même espacement vis-à-vis dudit axe principal (HA), ledit support rotatif (2) pouvant pivoter jusqu'à un premier emplacement (VP1) pris par pivotement, auquel la première broche (11) porte-pièces occupe un emplacement de transfert (TP) et la seconde broche (12) porte-pièces occupe un emplacement d'usinage (BP),
et ledit support rotatif (2) pouvant pivoter jusqu'à un second emplacement (VP2) pris par pivotement, auquel ladite première broche (11) porte-pièces occupe ledit emplacement d'usinage (BP) et ladite seconde broche (12) porte-pièces occupe ledit emplacement de transfert (TP),
**caractérisé par** les étapes suivantes :
a) le support rotatif (2) est amené au premier emplacement (VP1) pris par pivotement, une pièce achevée (FT) est déchargée de la première broche (11) porte-pièces occupant l'emplacement de transfert (TP), et une pièce brute (RT) est chargée sur ladite broche, puis une pièce semi-finie (HFT) est produite par fraisage préalable, à partir d'une pièce brute (RT), sur la seconde broche (12) porte-pièces occupant l'emplacement d'usinage (BP) ;
b) ledit support rotatif (2) est amené au second emplacement (VP2) pris par pivotement, une pièce semi-finie (HFT) est produite par fraisage préalable, à partir de ladite pièce brute (RT), sur ladite première broche (11) porte-pièces occupant ledit emplacement d'usinage (BP),
et une pièce semi-finie (aHFT), ébarbée et chanfreinée, est produite par chanfreinage et par découpe, à partir de ladite pièce semi-finie (HFT), sur ladite seconde broche (12) porte-pièces occupant ledit emplacement de transfert (TP) ;
c) ledit support rotatif (2) est amené audit premier emplacement (VP1) pris par pivotement,
une pièce semi-finie (aHFT), ébarbée et chanfreinée, est produite par chanfreinage et par découpe, à partir de ladite pièce semi-finie (HFT), sur ladite première broche (11) porte-pièces occupant ledit emplacement de transfert (TP),
et une pièce achevée (FT) est produite par fraisage de précision, à partir de ladite pièce semi-finie (aHFT) ébarbée et chanfreinée, sur ladite seconde broche (12) porte-pièces occupant ledit emplacement d'usinage (BP) ;
d) ledit support rotatif (2) est amené audit second emplacement (VP2) pris par pivotement,
une pièce achevée (FT) est produite par fraisage de précision, à partir de ladite pièce semi-finie (aHFT) ébarbée et chanfreinée, sur ladite première broche (11) porte-pièces occupant ledit emplacement d'usinage (BP),
et ladite pièce achevée (FT) est déchargée de ladite seconde broche (12) porte-pièces occupant ledit emplacement de transfert (TP), puis une pièce brute (RT) est chargée sur ladite broche ;
sachant que lesdites étapes a) à d) sont réitérées au moins une fois.

2. Procédé selon la revendication 1, **caractérisé par le fait que** l'axe principal (HA) du support rotatif (2) est orienté horizontalement au cours des étapes opératoires a) à d).

3. Procédé selon l'une des revendications précédentes, **caractérisé par le fait que** le même outil (4) de la machine-outil (1) est utilisé, à l'emplacement d'usinage (BP), pour le fraisage préalable de pièces brutes (RT) et pour le fraisage de précision de pièces semi-finies (aHFT), ébarbées et chanfreinées.

4. Procédé selon l'une des revendications précédentes, **caractérisé par le fait que** le chanfreinage d'une pièce semi-finie (HFT) s'opère depuis deux côtés à l'emplacement de transfert (TP), durant les étapes b) et c), avec équilibrage de forces.

5. Procédé selon la revendication 4, **caractérisé par le fait que** deux disques de chanfreinage (8a, 8b ; 51a, 51b) placés en vis-à-vis sont utilisés, durant les étapes b) et c), pour le chanfreinage d'une pièce semi-finie (HFT) à l'emplacement de transfert (TP).

6. Procédé selon la revendication 5, **caractérisé par le fait que** des outils de coupe (52) sont intégrés dans les disques de chanfreinage (51 a, 51b), et lesdits disques de chanfreinage (51a, 51b) sont utilisés pour le chanfreinage et pour la découpe.

7. Procédé selon l'une des revendications 1 à 5, **caractérisé par le fait que** le chanfreinage et la découpe d'une pièce semi-finie (HFT), à l'emplacement de transfert (TP), s'opèrent respectivement à l'aide d'outils distincts (8a, 8b ; 10) durant les étapes b) et c).

8. Procédé selon l'une des revendications 1 à 3, **caractérisé par le fait que**, durant les étapes b) et c), le chanfreinage d'une pièce semi-finie (HFT) s'opère à partir d'un premier côté, à l'emplacement de transfert (TP), et la découpe de ladite pièce semi-finie (HFT) s'opère à partir d'un second côté faisant face audit premier côté, audit emplacement de transfert (TP), à l'aide d'outils distincts (8a, 10) en vis-à-vis mutuel.

9. Procédé selon l'une des revendications précédentes, **caractérisé par le fait qu'**il s'opère également une découpe à l'emplacement d'usinage (BP), durant les étapes a) et b), pendant ou après le fraisage préalable d'une pièce brute (RT).
